# EUROPEAN PATENT APPLICATION

(11) **EP 4 636 851 A1**
(43) Date of publication of application: **22.10.2025**
(21) Application number: 23903791.4
(22) Date of filing: 17.11.2023
(51) Int. Cl.: H01M 4/36, H01M 4/525, H01M 4/505, C01G 53/00, H01M 4/131, H01M 10/052, H01M 4/02

(54) **POSITIVE ELECTRODE ACTIVE MATERIAL FOR RECHARGEABLE LITHIUM BATTERY, METHOD OF PREPARING SAME, AND RECHARGEABLE LITHIUM BATTERY INCLUDING SAME**

(30) Priority: 16.12.2022 KR 20220177578
(71) Applicant: POSCO Holdings Inc., Pohang-si, Gyeongsangbuk-do 37859 (KR); RESEARCH INSTITUTE OF INDUSTRIAL SCIENCE & TECHNOLOGY, Pohang-si, Gyeongsangbuk-do 37673 (KR)
(72) Inventor: NAM, Sang Cheol, Seoul 02587 (KR); HONG, Ki Joo, Incheon 21986 (KR); LEE, Jiho, Incheon 22008 (KR)
(74) Representative: Pfenning, Meinig & Partner mbB
(86) International application number: PCT/KR2023/018598
(87) International publication number: WO 2024/128588

(57) **Abstract**

The present embodiments relate to a positive electrode active material, a method for manufacturing the same, and a lithium secondary battery including the same. A positive electrode active material for a lithium secondary battery according to an embodiment includes a metal oxide composed of single-crystalline particles; and a coating layer positioned on a surface of the metal oxide and containing carbon, wherein the coating layer includes an amorphous structure.

## Description

### [Technical Field]

The present embodiments relate to a positive electrode active material for a lithium secondary battery, a method for manufacturing the same, and a lithium secondary battery including the same.

### [Background Art]

Recently, due to the explosive demand for electric vehicles and the increasing need for extended traveling range, the development of secondary batteries with high capacity and high energy density to meet these demands is actively underway worldwide. In particular, high nickel-based NCM positive electrode materials with high nickel content are used to satisfy these requirements.

However, as the nickel content increases, the strength of particles decreases, leading to microcracks during charging and discharging. In addition, due to this, the specific surface area of the positive electrode material increases, which in turn increases reactions with the electrolyte solution, resulting in increased gas generation. In addition, a cation mixing phenomenon increases in which Ni³⁺ that is unstable due to structural instability is reduced to stable Ni²⁺, which is subsequently converted into stable NiO. Therefore, it is difficult to practically apply the material as a positive electrode active material for a lithium-ion battery for an electric vehicle or energy storage.

To solve the above problem, a method has been proposed in which a positive electrode material is manufactured in the form of single-crystalline particles with maximized primary particle sizes, rather than in the form of poly-crystalline secondary particles formed by clustering of primary particles, and is then applied.

However, in general, in order to manufacture a positive electrode material in the form of single-crystalline particles, calcination should be performed at a higher temperature than that for poly-crystalline particles, which results in increased cation mixing. This leads to the formation of more nickel oxide on the surface of the single-crystalline particles, and this nickel oxide acts as a resistive layer, which increases the initial resistance and degrades the output characteristics.

### [DETAILED DESCRIPTION OF THE INVENTION]

### [Technical Problem]

The present embodiment attempts to provide a positive electrode active material for a lithium secondary battery, which is in the form of single-crystalline particles and exhibits significantly improved initial resistance and output characteristics by forming a carbon coating layer on the surface, a method for manufacturing the same, and a lithium secondary battery including the same.

### [Technical Solution]

A positive electrode active material for a lithium secondary battery according to an embodiment includes a metal oxide composed of a single-crystalline particle; and a coating layer positioned on a surface of the metal oxide and containing carbon, wherein the coating layer includes an amorphous structure.

A method for manufacturing a positive electrode active material for a lithium secondary battery according to an embodiment includes: preparing a metal hydroxide including nickel, cobalt, and manganese; subjecting a mixture of the metal hydroxide, a lithium raw material, and a doping raw material to a first calcination to obtain a lithium metal oxide; and subjecting the lithium metal oxide to a second calcination under conditions in which a carbon-containing gas is maintained to form a carbon-containing coating layer on a surface of the lithium metal oxide.

A positive electrode for a lithium secondary battery according to an embodiment includes: a current collector; and a positive electrode active material layer positioned on at least one surface of the current collector and including the positive electrode active material, wherein the positive electrode has a rolling density of 3.7 g/cc or more.

A lithium secondary battery according to an embodiment includes the positive electrode.

### [Advantageous Effects]

According to an embodiment, a positive electrode active material having carbon uniformly coated on the surface of single-crystalline particles can be provided by flowing a carbon-containing gas onto a metal oxide composed of single-crystalline particles so that a coating layer can be formed in a gas phase.

Accordingly, the high-rate output characteristics can be significantly improved while maintaining the excellent discharge capacity of the positive electrode active material composed of single-crystalline particles.

In addition, a positive electrode active material can be implemented that exhibits excellent room-temperature and high-temperature life, reduced initial resistance, and increased rolling density.

### [Description of the Drawings]

FIG. 1 is a schematic diagram for explaining a process of forming a coating layer in a positive electrode active material for a lithium secondary battery according to an embodiment.
FIG. 2 shows a charge curve of Comparative Example 1.
FIG. 3 shows a discharge curve of Comparative Example 1.
FIG. 4 shows a charge curve of Example 1.
FIG. 5 shows a discharge curve of Example 1.
FIG. 6 shows measurement results of an average particle size (D50) of positive electrode active materials of Comparative Example 1 and Examples 1 to 4.
FIG. 7 shows a SEM image of the positive electrode active material of Example 3, taken at a magnification of 1,000×.
FIG. 8 shows a SEM image of the positive electrode active material of Example 3, taken at a magnification of 20,000×.
FIG. 9 shows an HRTEM image of the positive electrode active material prepared according to Example 3, obtained using high resolution transmission electron microscope (HRTEM) equipment.
FIG. 10 is a further enlarged view of a central portion where a carbon coating layer, shown in white in FIG. 9, is formed.

### [BEST MODE FOR INVENTION]

The terms such as first, second and third are used for describing, but are not limited to, various parts, components, regions, layers, and/or sections. These terms are used only to discriminate one part, component, region, layer or section from another part, component, region, layer or section. Therefore, a first part, component, region, layer or section described below may be referred to as a second part, component, region, layer or section without departing from the scope of the present invention.

The technical terms used herein are set forth only to mention specific embodiments and are not intended to limit the present invention. Singular forms used herein are intended to include the plural forms as long as phrases do not clearly indicate an opposite meaning. In the present specification, the term "including (comprising)" is intended to embody specific characteristics, regions, integers, steps, operations, elements and/or components, but is not intended to exclude presence or addition of other characteristics, regions, integers, steps, operations, elements, and/or components.

When a part is referred to as being "above" or "on" another part, it may be directly above or on the other part or an intervening part may also be present. In contrast, when a part is referred to as being "directly above" another part, there is no intervening part present.

Unless otherwise defined, all terms including technical and scientific terms used herein have the same meanings as the meanings generally understood by one skilled in the art to which the present invention pertains. Terms, such as those defined in commonly used dictionaries, are to be interpreted as having meanings consistent with the relevant technical literature and the present disclosure, and are not to be interpreted as having idealized or overly formal meanings unless expressly so defined herein.

As described above, the positive electrode material in the form of single-crystalline particles has the problem of increased initial resistance and degraded output characteristics. To solve this problem, the single-crystalline particles should be manufactured to have very small particle sizes. In this case, however, there is a problem in that the process cost increases and, at the same time, residual lithium present on the surface of the single-crystalline particles causes a gel hardening phenomenon during the manufacture of slurry for electrode plate manufacture, or the like, leading to electrode defects.

In the present embodiment, the above problem is solved by using a surface coating technology for a positive electrode active material in the form of single-crystalline particles.

*31

Specifically, a positive electrode active material for a lithium secondary battery according to an embodiment may include a metal oxide composed of single-crystalline particles; and a coating layer positioned on a surface of the metal oxide and containing carbon, wherein the coating layer may include an amorphous structure.

In the present embodiment, the single-crystalline particle may include at least one of a single crystal structure composed of one particle and a monolith structure composed of two to three clustered particles.

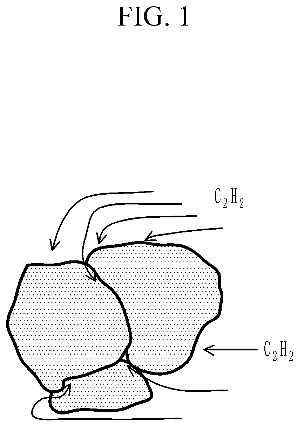

FIG. 1 shows a schematic diagram for explaining a process of forming a coating layer in a positive electrode active material of the present example.

Referring to FIG. 1, in the present embodiment, carbon can be uniformly coated on the surface of single-crystalline particles by flowing acetylene (C2H2) gas onto single-crystalline particles including a monolith structure and thermally decomposing the gas at high temperature.

In the currently commercialized dry coating process, a coating layer can be formed only on the outer surface of single-crystalline particles. However, since chemical vapor deposition (CVD) is used in the present embodiment, the coating layer may be formed in the gas phase. This provides the advantage that even fine voids can be easily penetrated, thereby enabling formation of a uniform coating layer.

Therefore, in the present embodiment, a carbon layer may also be present at boundaries of particles having a monolithic structure in which two to three particles are clustered.

Based on the entire positive electrode active material, the content of carbon may be 0.6 wt% or less. More specifically, the carbon content may be in a range of more than 0 wt% and 0.6 wt% or less, 0.01 wt% to 0.50 wt%, 0.01 wt% to 0.40 wt%, or 0.01 wt% to 0.36 wt%.

When the carbon content in the positive electrode active material of the present embodiment falls within the specific range, the high-rate output characteristics can be significantly improved while maintaining excellent discharge capacity. In addition, room-temperature and high-temperature life is excellent, initial resistance can be reduced, and rolling density can also be increased.

A thickness of the coating layer may be in a range of 10 nm to 100 nm or 10 nm to 50 nm. When the thickness of the coating layer falls within the specific range, the output characteristics of the positive electrode active material in the form of single-crystalline particles can be improved.

Next, an average particle diameter (D50) of the positive electrode active material may be in a range of 3 µm to 5 µm. When the average particle diameter (D50) falls within the specific range, a positive electrode active material having life characteristics equivalent to or superior to those of a positive electrode active material in the form of poly-crystalline particles can be realized, even though it has a structure in the form of single-crystalline particles.

Note that the metal oxide may include nickel, cobalt, manganese, and a doping element. The doping element may be one or more selected from the group consisting of Zr, Al, B, P, La, Ta, Ti, W, Mo, Si, Ga, Zn, Nb, Ag, Sn, Bi, Au, Y, Ge, V, Cr, and Fe. The content of the doping element may be in a range of 0.0005 mol to 0.04 mol or 0.001 mol to 0.03 mol, based on 1 mol of the total amount of nickel, cobalt, manganese, and the doping element. In this case, the doping element refers to a doping amount of the doping element included in the finally obtained positive electrode active material.

In positive electrode active materials, selection of a doping element is important for ensuring life and various electrochemical performances. In the present embodiment, the characteristics of the positive electrode active material can be improved by applying various doping elements as described above.

In the present embodiment, the doping element may include Zr and Al.

Zr acts as a kind of pillar because Zr ions occupy Li sites, and alleviates shrinkage of the lithium ion path during charging and discharging, thereby stabilizing the layered structure. This phenomenon can increase the cycle life by reducing cation mixing and increasing the lithium diffusion coefficient.

In addition, Al ions move to the tetragonal lattice sites, which suppresses the deterioration of the layered structure into a spinel structure in which the migration of lithium ion is relatively hindered.

The content of Zr may be in a range of 0.001 mol to 0.01 mol, more specifically, in the range of 0.0016 mol to 0.0064 mol, 0.0017 mol to 0.0055 mol, or 0.002 mol to 0.005 mol, based on 1 mol of the total amount of nickel, cobalt, manganese, and the doping element. When the doping amount of Zr falls within the specific range, the high-temperature resistance increase rate can be reduced while ensuring excellent life characteristics.

The content of Al may be in a range of 0.001 mol to 0.04 mol, more specifically, in a range of 0.004 mol to 0.028 mol, 0.0045 mol to 0.027 mol, or 0.0055 mol to 0.025 mol, based on 1 mol of the total amount of nickel, cobalt, manganese, and the doping element. When the doping amount of Al falls within the specific range, high-temperature life and thermal stability can be further improved.

The content of nickel in the metal oxide particles of the present embodiment may be 0.85 mol or more based on 1 mol of the total amount of nickel, cobalt, manganese, and the doping element. More specifically, the content of nickel may be in a range of 0.85 mol to 0.99 mol, or 0.87 mol to 0.99 mol.

As in the present embodiment, when the content of nickel in the metal oxide is 0.85 mol or more, a positive electrode active material having high output characteristics can be implemented. The positive electrode active material of the present embodiment having such a composition can improve the capacity of a battery to which it is applied, due to an increase in energy density per unit volume, and is also highly suitable for use in electric vehicles.

Note that the positive electrode active material of the present embodiment may further include a positive electrode active material including a metal oxide in the form of secondary particles in which primary particles are agglomerated.

That is, it may include a positive electrode active material composed of the single-crystalline particles and having a carbon-containing coating layer formed thereon, and a positive electrode active material including a metal oxide composed of secondary particles having an average particle diameter (D50) larger than the average particle diameter (D50) of the positive electrode active material composed of the single-crystalline particles and having a carbon-containing coating layer formed thereon. When a positive electrode active material including a metal oxide composed of single-crystalline particles and having a carbon-containing coating layer formed thereon and a positive electrode active material including a metal oxide composed of secondary particles are mixed and used in a bimodal form, it is advantageous in that the electrode mixture density can be increased.

**In** the bimodal-type positive electrode active material as described above, a mixing ratio of the positive electrode active material including a metal oxide composed of single-crystalline particles and having a carbon-containing coating layer formed thereon and the positive electrode active material including a metal oxide in the form of secondary particles may be in a range of 30:70 to 10:90 or 25:75 to 15:85 in terms of weight ratio (single-crystalline particles : secondary particles). When the positive electrode active materials including metal oxides composed of single-crystalline particles and secondary particles are mixed and used in the weight ratio as described above, the electrode mixture density can be increased.

**In** this case, the positive electrode active materials including metal oxides composed of single-crystalline particles and secondary particles may have the same composition or may have different compositions. Specifically, the metal oxide composed of the secondary particles may also include nickel, cobalt, manganese, and a doping element.

For example, the content of nickel in the metal oxide particles in the form of secondary particles may be 0.8 mol or more based on 1 mol of the total amount of nickel, cobalt, and manganese. More specifically, the content of nickel may be in a range of 0.8 mol to 0.99 mol, 0.85 mol to 0.99 mol, or 0.88 mol to 0.99 mol.

The metal oxide in the form of secondary particles may further include a doping element, and the doping element may include at least one of Al, Zr, Nb, Mo, W, Ti, Ce, Mg, B, P, V, Sr, and B.

The specific description and content of the above doping element are the same as those of the positive electrode active material including the metal oxide composed of the single-crystalline particles described above, and thus are omitted here.

Additionally, in the present embodiment, an average particle diameter (D50) of the positive electrode active material including the metal oxide in the form of secondary particles may be in a range of 10 µm to 20 µm, or 12 µm to 17 µm. When the average particle diameter of the positive electrode active material including the metal oxide composed of secondary particles falls within the specific range, large and small particles can be positioned in an appropriate distribution in the bimodal-type positive electrode active material, thereby improving the energy density of a lithium secondary battery.

A method for manufacturing a positive electrode active material for a lithium secondary battery according to another embodiment may include the steps of: preparing a metal hydroxide including nickel, cobalt, and manganese; subjecting a mixture of the metal hydroxide, a lithium raw material, and a doping raw material to a first calcination to obtain a lithium metal oxide; and subjecting the lithium metal oxide to a second calcination under conditions in which a carbon-containing gas is maintained to form a carbon-containing coating layer on a surface of the lithium metal oxide.

First, a metal hydroxide including nickel, cobalt, and manganese is prepared.

**In** the present embodiment, a metal salt aqueous solution including a nickel raw material, a cobalt raw material, a manganese raw material, and water is prepared, and then the metal salt aqueous solution is supplied to a co-precipitation reactor to obtain a metal hydroxide.

Next, a step of subjecting a mixture of the metal hydroxide, a lithium raw material, and a doping raw material to a first calcination to obtain a lithium metal oxide is performed. In this case, the mixture may be prepared such that the molar ratio (Li/Me) of lithium (Li) to the total metal (Me) excluding lithium is in the range of 1.0 to 1.1, or in the range of 1.01 to 1.08.

The first calcination may be performed at temperatures of 720°C to 900°C or 760°C to 860°C for 10 hours to 24 hours. When the first calcination temperature and time conditions fall within the specific ranges, a positive electrode material in the form of single-crystalline particles or monolith may be manufactured.

Thereafter, a step of subjecting the lithium metal oxide to a second calcination under conditions in which a carbon-containing gas is maintained to form a carbon-containing coating layer on a surface of the lithium metal oxide is performed.

The carbon-containing gas may include at least one of acetylene (C₂H₂) gas, methane (CH₄) gas, ethylene (C₂H₄) gas, and propane (C₃H₈) gas.

The second calcination process may be performed at temperatures of 560°C to 680°C, 580°C to 660°C, or 600°C to 640°C for 0.5 hour to 2 hours. When the second calcination temperature and time conditions fall within the specific ranges, there is an advantage in that a carbon coating is well formed.

Here, the time for which the carbon-containing gas is maintained may be in a range of 0.5 to 10 minutes, or 1 to 4 minutes. When the time for which the carbon-containing gas is maintained in the coating layer forming process falls within the specific range, there is an advantage in that a carbon coating with an optimal thickness is provided.

Another embodiment provides a positive electrode including a current collector and a positive electrode active material layer positioned on one surface of the current collector and including a positive electrode active material manufactured according to the embodiment described above.

There is provided a positive electrode for a lithium secondary battery in which the positive electrode has a rolling density of 3.7 g/cc or more, more specifically, in a range of 3.7 g/cc to 4.0 g/cc.

When the rolling density falls within the specific range, the energy density of the lithium secondary battery can be significantly improved. Therefore, when the positive electrode according to the present embodiment is applied to an electric vehicle, the traveling distance can be dramatically increased.

The characteristics of the positive electrode active material constituting the positive electrode active material layer are as described above. Therefore, a detailed description of the positive electrode active material will be omitted.

The current collector may be, for example, made of stainless steel, aluminum, nickel, titanium, calcined carbon, or aluminum or stainless steel surface-treated with carbon, nickel, titanium, silver, or the like.

Note that the positive electrode active material layer may include a binder and a conductive material.

In this case, the binder serves to improve adhesion between positive electrode active material particles and adhesion between the positive electrode active material and the positive electrode current collector. Specific examples include, but are not limited to, polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene monomer rubber (EPDM rubber), sulfonated-EPDM, styrene butadiene rubber (SBR), fluoro rubber, or various copolymers thereof, and the like, and one thereof may be used alone or a mixture of two or more thereof may be used. The binder may be included in an amount of 1 to 30 wt% based on the total weight of the positive electrode active material layer.

In addition, the conductive material is used to impart conductivity to the electrode, and can be used without particular limitation as long as it has electronic conductivity without causing a chemical change in a battery to be configured. Specific examples may include, but are not limited to, graphite such as natural graphite and artificial graphite; a carbon-based material such as carbon black, acetylene black, Ketjen black, channel black, furnace black, lamp black, thermal black, and carbon fiber; metal powders or metal fibers such as copper, nickel, aluminum, and silver; a conductive whisker such as zinc oxide and potassium titanate; a conductive metal oxide such as titanium oxide; or a conductive polymer such as polyphenylene derivative, or the like, and one thereof may be used alone or a mixture of two or more thereof may be used. The conductive material may typically be included in an amount of 1 to 30 wt% based on the total weight of the positive electrode active material layer.

The positive electrode may be manufactured according to a positive electrode manufacturing method of the related art, except that the above-described positive electrode active material is used.

Specifically, the positive electrode may be manufactured by applying a composition for forming a positive electrode active material layer, including the above-described positive electrode active material and optionally, as necessary, a binder, a conductive material or a solvent, onto a positive electrode current collector, followed by drying and rolling. In this case, the types and contents of the positive electrode active material, binder, and conductive material are as described above.

The solvent may be a solvent that is generally used in the relevant technical field, and may include dimethylsulfoxide (DMSO), isopropyl alcohol, N-methylpyrrolidone (NMP), acetone, or water, and one of these may be used alone, or a mixture of two or more may be used. An amount of the solvent used is sufficient to dissolve or disperse the positive electrode active material, conductive material, and binder, considering the coating thickness of the slurry and the manufacturing yield, while achieving a viscosity that ensures excellent thickness uniformity during the application process for manufacturing the positive electrode.

In an alternative method, the positive electrode may be manufactured by casting the composition for forming a positive electrode active material layer onto a separate support, and then laminating a film obtained by delaminating it from the support onto a positive electrode current collector.

Still another embodiment provides a lithium secondary battery including the positive electrode.

The lithium secondary battery may specifically include a positive electrode, a negative electrode positioned opposite the positive electrode, a separator interposed between the positive electrode and the negative electrode, and an electrolyte, in which the positive electrode is as described above. In addition, the lithium secondary battery may optionally further include a battery container that accommodates an electrode assembly including the positive electrode, the negative electrode, and the separator, and a sealing member that seals the battery container.

In the lithium secondary battery, the negative electrode may include a negative electrode current collector and a negative electrode active material layer positioned on the negative electrode current collector.

The negative electrode current collector is not particularly limited as long as it has high conductivity without causing a chemical change in the battery, and for example, copper, stainless steel, aluminum, nickel, titanium, calcined carbon, copper or stainless steel surface-treated with carbon, nickel, titanium, silver, or the like, an aluminum-cadmium alloy, and the like may be used. In addition, the negative electrode current collector may typically have a thickness of 3 to 500 µm, and, like the positive electrode current collector, may have fine unevenness formed on the surface of the current collector to increase the bonding strength of the negative electrode active material. For example, the negative electrode current collector may be used in various forms such as a film, a sheet, a foil, a net, a porous body, a foamed body, and a non-woven fabric body.

The negative electrode active material layer may optionally include a binder and a conductive material together with the negative electrode active material. The negative electrode active material layer may be manufactured by, for example, applying a composition for forming a negative electrode active material layer, including a negative electrode active material and optionally a binder and a conductive material, onto a negative electrode current collector and drying the composition, or by casting the composition for forming a negative electrode active material layer onto a separate support, and then laminating a film obtained by delaminating it from the support onto a negative electrode current collector.

As the negative electrode active material, a compound capable of reversible intercalation and deintercalation of lithium may be used. Specific examples thereof include a carbonaceous material such as artificial graphite, natural graphite, graphitized carbon fiber, and amorphous carbon; a metallic compound capable of alloying with lithium, such as Si, Al, Sn, Pb, Zn, Bi, In, Mg, Ga, Cd, a Si alloy, an Sn alloy, or an Al alloy; a metal oxide into which lithium can be doped and from which lithium can be de-doped, such as SiO_{β} (0 < β < 2), SnO₂, vanadium oxide, and lithium vanadium oxide; or a composite including the metallic compound and the carbonaceous material, such as a Si-C composite or an Sn-C composite, and any one thereof or a mixture of two or more thereof may be used. Additionally, a metal lithium thin film may be used as the negative electrode active material. In addition, both low-crystalline carbon and high-crystalline carbon may be used as the carbon material. Representative examples of the low-crystallinity carbon include soft carbon and hard carbon, and representative examples of the high-crystallinity carbon include irregular, platelike, flaky, spherical, or fibrous natural graphite or artificial graphite, Kish graphite, pyrolytic carbon, mesophase pitch-based carbon fibers, meso-carbon microbeads, mesophase pitches, and high-temperature fired carbon such as petroleum or coal tar pitch derived cokes.

The binder and the conductive material may be the same as those described above for the positive electrode.

Next, depending on the type of lithium secondary battery, a separator may be present between the positive electrode and the negative electrode. As such a separator, polyethylene, polypropylene, polyvinylidene fluoride or a multilayer film of two or more layers thereof may be used, and a mixed multilayer film such as a polyethylene/polypropylene two-layer separator, a polyethylene/polypropylene/polyethylene three-layer separator, and a polypropylene/polyethylene/polypropylene three-layer separator may be used.

In addition, in the lithium secondary battery, examples of the electrolyte include, but are not limited to, an organic liquid electrolyte, an inorganic liquid electrolyte, a solid polymer electrolyte, a gel-type polymer electrolyte, a solid inorganic electrolyte, and a molten inorganic electrolyte, which can be used in the manufacture of a lithium secondary battery.

Specifically, the organic liquid electrolyte may include an organic solvent and a lithium salt.

Any organic solvent may be used without particular limitation as long as it can serve as a medium through which ions involved in electrochemical reactions of the battery can move. Specifically, examples of the organic solvent may include an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), and propylene carbonate (PC); an alcohol-based solvent such as ethyl alcohol and isopropyl alcohol; nitriles such as R-CN (where R is a straight-chain, branched or cyclic hydrocarbon group having C2 to C20, and may include a double bond, an aromatic ring or an ether bond); amides such as dimethylformamide; dioxolanes such as 1,3-dioxolane; or sulfolanes. Among these, a carbonate-based solvent is preferable, and a mixture of a cyclic carbonate (for example, ethylene carbonate or propylene carbonate, or the like) having high ionic conductivity and high permittivity, which that can improve the charge/discharge performance of the battery, and a low-viscosity linear carbonate-based compound (for example, ethyl methyl carbonate, dimethyl carbonate, diethyl carbonate, or the like) is more preferable. In this case, when the cyclic carbonate and the linear carbonate are mixed at a volume ratio of about 1:1 to about 1:9, excellent performance of the electrolyte can be exhibited.

The lithium salt can be used without particular limitation as long as it is a compound capable of providing lithium ions used in a lithium secondary battery. Specifically, examples of the lithium salt may include LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, Lil, or LiB(C₂O₄)₂. A concentration of the lithium salt is preferably in a range of 0.1 to 2.0 M. When the concentration of the lithium salt falls within the specific range, the electrolyte has appropriate conductivity and viscosity, thereby exhibiting excellent performance of the electrolyte and allowing lithium ions to move effectively.

As described above, the lithium secondary battery including the positive electrode active material according to the present invention stably exhibits excellent discharge capacity, output characteristics, and capacity retention, and is therefore useful for portable devices such as mobile phones, laptop computers, and digital cameras, as well as electric vehicles such as hybrid electric vehicles (HEVs).

### DETAILED DESCRIPTION OF THE EMBODIMENTS

Hereinafter, embodiments of the present invention will be described in detail. However, the embodiments are only provided by way of example, and the present invention is not limited thereto, but is only defined by the scope of the claims described later.

### Comparative Example 1 - Positive Electrode Active Material in Form of Single-Crystalline Particles

### (1) Preparation of Precursor

The precursor was prepared by a general co-precipitation method.

Specifically, NiSO₄·6H₂O was used as the nickel raw material, CoSO₄·7H₂O was used as the cobalt raw material, and MnSO₄·H₂O was used as the manganese raw material. These raw materials were dissolved in distilled water to prepare a metal salt aqueous solution.

After preparing a co-precipitation reactor, the reactor was purged with N2 to prevent oxidation of metal ions during the co-precipitation reaction, and the temperature inside the reactor was maintained at 50°C.

NH₄(OH) as a chelating agent was introduced into the co-precipitation reactor, and NaOH was used for pH adjustment. The precipitates obtained by the co-precipitation process were filtered, washed with distilled water, and then dried in an oven at 100°C for 24 hours, thereby preparing a positive electrode active material precursor.

The composition of the prepared precursor was (Ni_{0.88}Co_{0.07}Mn_{0.05})(OH)₂, and the average particle diameter (D50) was about 4 µm.

### (2) Preparation of Positive Electrode Active Material

A mixture was prepared by uniformly mixing LiOH·H₂O (Samchun Chemical Co., Ltd., battery grade), ZrO₂ (Aldrich, 4N), and Al(OH)₃ (Aldrich, 4N) with the precursor prepared with the above (1).

In this case, the molar ratio (Li/Me) of lithium (Li) to the total metal (Me) excluding lithium was designed to be slightly greater than 1, and Zr and Al were added in doping amounts of 0.003 mol and 0.01 mol, respectively.

Next, the mixture was calcined at 850°C for 24 hours in a box-type furnace in which oxygen inflows at 1,000 mL/min, thereby obtaining a positive electrode active material having a composition of LiNi_{0.87}Co_{0.07}Mn_{0.05}Al_{0.01}O₂. In this case, the amount of Zr added was very small, and therefore, was not represented in the composition. The single-crystalline particles prepared in this manner were pulverized using a jet mill to obtain a positive electrode active material in the form of single-crystalline particles with an average particle diameter (D50) of about 4 µm.

### Example 1 - Preparation of Positive Electrode Active Material with Carbon Coating Layer Formed

10 g of the positive electrode active material in the form of single-crystalline particles prepared in Comparative Example 1 was loaded in an alumina boat measuring 10 cm x 5 cm, which was then placed at the center of a quartz tube with a diameter of 20 cm and a length of 50 cm. The quartz tube was then positioned at the center of a furnace. A thermocouple was passed through the quartz tube so that the tip of the thermocouple was brought into contact with the surface of the alumina boat, thereby enabling temperature measurement. An outlet of the quartz tube installed inside the furnace was connected to a tube, and a rotary pump was used to maintain the initial vacuum level inside the tube at 100 mTorr. Then, the temperature of the furnace was increased to 620°C, and acetylene (C₂H₂) gas was then flowed into an inlet of the quartz tube until the pressure of acetylene inside the quartz tube reached 380 Torr. In this case, the acetylene gas was flowed into the quartz tube for 1 minute.

Thereafter, the furnace was returned to a vacuum state, and the furnace was lowered to room temperature, thereby preparing a carbon-coated positive electrode active material.

### Comparative Examples 2 and 3, Examples 2 to 12, and Reference Examples 1 to 6

Positive electrode active materials in the form of single-crystalline particles or positive electrode active materials with a coating layer formed thereon were prepared in the same method as in Example 1, except that the calcination temperature when preparing a positive electrode active material in the form of an oxide of single-crystalline particles, the composition of the positive electrode active material in the form of single-crystalline particles, the calcination temperature when forming a carbon coating layer, the retention time of acetylene gas in the quartz tube, and the amount of carbon coating were adjusted as shown in Table 1 below.

**(Table 1)**

| Classification | Composition of positive electrode active material in the form of single-crystalline particles | Oxide calcination temperature | Retention time of acetylene (C₂H₂) gas in quartz tube (minutes) | Temperatur e in furnace during carbon coating (°C) |
|---|---|---|---|---|
| **Comparative Example 1** | LiNi_{0.87}Co_{0.07}Mn_{0.05}Al_{0.01}O₂ | **850** | **0** | **0** |
| Example 1 | LiNi_{0.87}Co_{0.07}Mn_{0.05}Al_{0.01}O₂ | | 1 | 620 |
| Example 2 | LiNi_{0.87}Co_{0.07}Mn_{0.05}Al_{0.01}O₂ | | 2 | 620 |
| Example 3 | LiNi_{0.87}Co_{0.07}Mn_{0.05}Al_{0.01}O₂ | | 3 | 620 |
| Reference Example 1 | LiNi_{0.87}Co_{0.07}Mn_{0.05}Al_{0.01}O₂ | | 5 | 620 |
| Example 4 | LiNi_{0.87}Co_{0.07}Mn_{0.05}Al_{0.01}O₂ | | 1 | 700 |
| Reference Example 2 | LiNi_{0.87}Co_{0.07}Mn_{0.05}Al_{0.01}O₂ | | 1 | 780 |
| **Comparative Example 2** | LiNi_{0.91}Co_{0.05}Mn_{0.03}Al_{0.01}O₂ | **800** | **0** | **0** |
| Example 5 | LiNi_{0.91}Co_{0.05}Mn_{0.03}Al_{0.01}O₂ | | 1 | 620 |
| Example 6 | LiNi_{0.91}Co_{0.05}Mn_{0.03}Al_{0.01}O₂ | | 2 | 620 |
| Example 7 | LiNi_{0.91}Co_{0.05}Mn_{0.03}Al_{0.01}O₂ | | 3 | 620 |
| Reference Example 3 | LiNi_{0.91}Co_{0.05}Mn_{0.03}Al_{0.01}O₂ | | 5 | 620 |
| Example 8 | LiNi_{0.91}Co_{0.05}Mn_{0.03}Al_{0.01}O₂ | | 1 | 650 |
| Reference Example 4 | LiNi_{0.91}Co_{0.05}Mn_{0.03}Al_{0.01}O₂ | | 1 | 720 |
| **Comparative Example 3** | LiNi_{0.95}Co_{0.03}Mn_{0.01}Al_{0.01}O₂ | 780 | 0 | 0 |
| Example 9 | LiNi_{0.95}Co_{0.03}Mn_{0.01}Al_{0.01}O₂ | | 1 | 620 |
| Example 10 | LiNi_{0.95}Co_{0.03}Mn_{0.01}Al_{0.01}O₂ | | 2 | 620 |
| Example 11 | LiNi_{0.95}Co_{0.03}Mn_{0.01}Al_{0.01}O₂ | | 3 | 620 |
| Reference Example 5 | LiNi_{0.95}Co_{0.03}Mn_{0.01}Al_{0.01}O₂ | | 5 | 620 |
| Example 12 | LiNi_{0.95}Co_{0.03}Mn_{0.01}Al_{0.01}O₂ | | 1 | 650 |
| Reference Example 6 | LiNi_{0.95}Co_{0.03}Mn_{0.01}Al_{0.01}O₂ | | 1 | 720 |

### Experimental Example 1 - Measurement of Life Characteristics

### (1) Preparation of Coin-Type Half-Cell

CR2032 coin cells were prepared using the positive electrode active materials prepared as described above, and then subjected to electrochemical evaluation. The results are shown in Table 2 below.

Specifically, a slurry for a positive electrode active material was prepared by mixing a positive electrode active material, a conductive material (carbon black), and a polyvinylidene fluoride binder (trade name: KF1120) in a weight ratio of 96.5:1.5:2, and adding the mixture to an N-methyl-2-pyrrolidone solvent such that the solid content was about 30 wt%.

The slurry was coated on an aluminum foil (Al foil, thickness: 15 µm), serving as a positive electrode current collector, using a doctor blade, followed by drying and rolling to prepare a positive electrode. The loading amount of the positive electrode was about 15 mg/cm². A 2032 coin-type half-cell was prepared using the positive electrode, a lithium metal negative electrode (300 µm-thick, MTI), an electrolyte solution, and a polypropylene separator in accordance with a method of the related art. The electrolyte solution was prepared by dissolving 1M LiPF₆ in a mixed solvent of ethylene carbonate (EC), dimethyl carbonate (DMC), and ethyl methyl carbonate (EMC) (a mixing ratio of EC:DMC:EMC=3:4:3 vol%) to prepare a mixed solution, and then adding 3 wt% of vinylene carbonate (VC) thereto.

### (2) Evaluation of Charge and Discharge Characteristics

The coin-type half-cell prepared in the above (1) was aged at room temperature (25°C) for 10 hours, and then a charge/discharge test was conducted.

The capacity evaluation was conducted based on a reference capacity of 200 mAh/g, and the charge/discharge conditions were constant current (CC)/constant voltage (CV) in the range of 3.4 V to 4.3 V, with a cut-off at 1/20 C. The initial capacity was measured under 0.1 C charge/0.1 C discharge conditions.

### (3) Measurement of Room-Temperature Initial Resistance Characteristics

The room-temperature initial resistance (direct current internal resistance: DC-IR) was calculated by applying Ohm's law after charging the cell to 100% (SOC 100) at 4.3 V at 25°C, applying a discharge current of 0.1 C, and measuring the voltage after 60 seconds (the decreased voltage value).

### (4) Measurement of Output Characteristics

The output characteristics were calculated by dividing the discharge capacities at 1C, 2C, and 4C by the charge capacity obtained by charging at 0.5C, and converting the results into percentages (%).

### (5) Measurement of Life Characteristics

The life characteristics were measured 50 times under 0.3 C charge/0.3 C discharge conditions at room temperature (25°C) and high temperature (45°C).

### (6) Measurement of Electrode Plate Rolling Density

The electrode plate density was calculated by measuring the weight per unit volume of the electrode plate after coating the positive electrode slurry, followed by drying and rolling.

### (7) Measurement of Average Particle Diameter (D50)

The average particle diameter (D50) was measured using a particle size analyzer (PSA) available from Microtrac.

### (8) Measurement of Carbon Content

The carbon content in the entire positive electrode active material was quantified using a C/S (Carbon/Sulfur) determinator available from Eltra.

**(Table 2)**

| Classification | Initial discharg e capacity (mAh/g) | Efficiency (%) | Dischar ge at 1C (%) | Dischar ge at 2C (%) | Dischar ge at 4C (%) | Room-temper ature life (%) | High-temper ature life (%) | Room-temperatur e Initial resistance (ohm) Resistance (ohm) | D50 (µm) | Electro de plate Rolling density (g/cc) | **Carbon content** (wt%) |
|---|---|---|---|---|---|---|---|---|---|---|---|
| **Comparative Example 1** | **210.5** | **90.6** | **91.4** | **88.8** | **84.5** | **95.6** | **93.2** | **7.47** | **3.77** | **3.8** | **-** |
| Example 1 | 210.2 | 90.7 | 91.7 | 90.1 | 87.6 | 95.8 | 94.2 | 6.34 | 3.81 | 3.8 | 0.03 |
| Example 2 | 209.8 | 90.8 | 91.6 | 90.4 | 88.8 | 96.6 | 94.7 | 5.88 | 3.9 | 3.76 | 0.16 |
| Example 3 | 209.1 | 90.7 | 91.7 | 90.5 | 88.3 | 96.3 | 94.5 | 5.82 | 4.02 | 3.7 | 0.32 |
| Reference Example 1 | 199.2 | 81.2 | 87.2 | 83.1 | 78.2 | 90.2 | 91.3 | 10.4 | 5.82 | 3.52 | 0.62 |
| Example 4 | 208.4 | 90.1 | 91.1 | 89.8 | 87.1 | 95.1 | 94.1 | 6.72 | 3.87 | 3.76 | 0.18 |
| Reference Example 2 | 188.2 | 83.2 | 86.3 | 83.2 | 78.8 | 89.2 | 90.2 | 11.5 | 3.91 | 3.5 | 0.74 |
| **Comparative Example 2** | **215.6** | **88.4** | **90.1** | **86.3** | **82.5** | **94.2** | **92.5** | **15.2** | **3.82** | **3.8** | **-** |
| Example 5 | 215.1 | 88.5 | 90.4 | 86.8 | 84.1 | 94.5 | 93.1 | 14.5 | 3.83 | 3.8 | 0.04 |
| Example 6 | 214.2 | 88.5 | 90.9 | 87.2 | 84.9 | 94.8 | 93.9 | 13.2 | 3.89 | 3.75 | 0.18 |
| Example 7 | 214 | 88.3 | 91.1 | 87.9 | 85.3 | 94.9 | 94.1 | 12.4 | 3.98 | 3.72 | 0.34 |
| Reference Example 3 | 203.2 | 81.1 | 84.1 | 81.7 | 76.5 | 85.2 | 83.3 | 27.4 | 5.77 | 3.56 | 0.7 |
| Example 8 | 214.5 | 88.5 | 90.5 | 87.7 | 85.8 | 95.2 | 94.1 | 12.3 | 4.04 | 3.76 | 0.21 |
| Reference Example 4 | 207.2 | 84.5 | 85.4 | 82.1 | 75.2 | 83.4 | 83.2 | 29.1 | 4.52 | 3.5 | 0.82 |
| **Comparative Example 3** | **220.3** | **87.2** | **88.5** | **85.4** | **80.3** | **92.2** | **90.3** | **22.2** | **3.89** | **3.8** | **-** |
| Example 9 | 219.8 | 87.5 | 88.6 | 86.6 | 83.2 | 92.3 | 91.3 | 20.1 | 3.91 | 3.74 | 0.05 |
| Example 10 | 219.4 | 87.6 | 88.9 | 86.9 | 83.8 | 92.5 | 93.1 | 19.2 | 3.93 | 3.72 | 0.2 |
| Example 11 | 219.2 | 87.5 | 89.3 | 87.3 | 84.1 | 92.7 | 93.1 | 18.2 | 3.99 | 3.7 | 0.36 |
| Reference Example 5 | 206.5 | 78.5 | 83.2 | 79.2 | 74.3 | 83.4 | 81.2 | 30.5 | 5.92 | 3.56 | 0.78 |
| Example 12 | 219.2 | 87.4 | 88.6 | 86.5 | 83.1 | 92.1 | 91.2 | 20.4 | 3.92 | 3.75 | 0.22 |
| Reference Example 6 | 205.4 | 82.1 | 85.2 | 82.1 | 78.3 | 86.1 | 83.1 | 28.8 | 4.76 | 3.58 | 1.12 |

Referring to Table 2, it can be confirmed that, when the carbon coating process is performed such that the carbon content in the positive electrode active material falls within a certain range, as in Examples 1 to 12, the discharge capacity does not decrease significantly, and the output characteristics are excellent. In particular, it can be seen that the effect is excellent in high-rate output characteristics, which is a disadvantage of positive electrode active materials having a single-crystalline particle structure. In addition, it can be seen that the room-temperature life and high-temperature life of Examples 1 to 12 are well maintained without significant degradation as compared to those before coating.

In addition, it can be confirmed that the rolling density, which is one of the greatest advantages of the single-crystalline particle structure, is well maintained without significant reduction.

However, as in Reference Examples 1 to 6, it can be seen that, when the carbon content exceeds a certain level, the initial resistance increases significantly, which leads to considerable reductions in discharge capacity, efficiency, and high-rate output characteristics. In addition, it can be seen that the average particle diameter (D50) significantly increases and the rolling density significantly decreases compared to the Examples, which indicates that the battery characteristics deteriorate significantly.

### Experimental Example 2 - Comparison of Charge and Discharge Curves

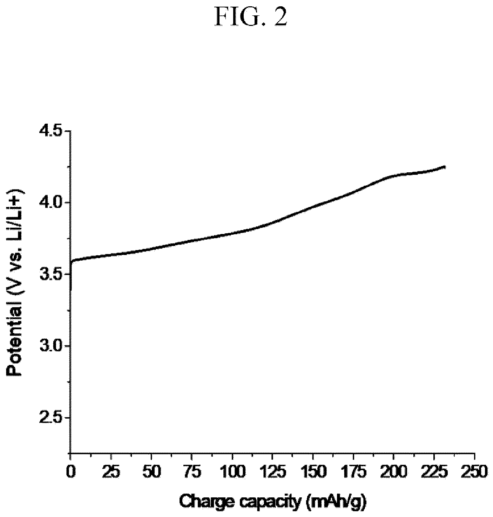

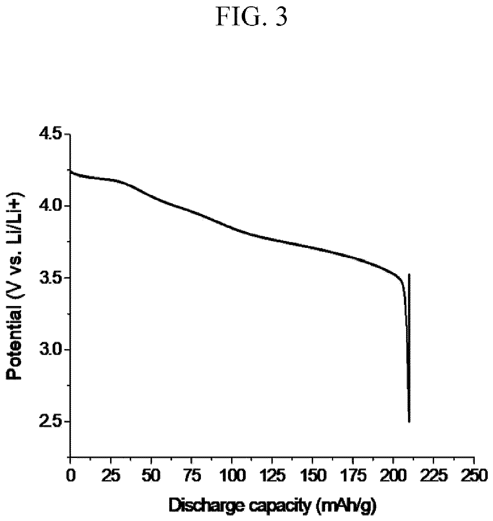

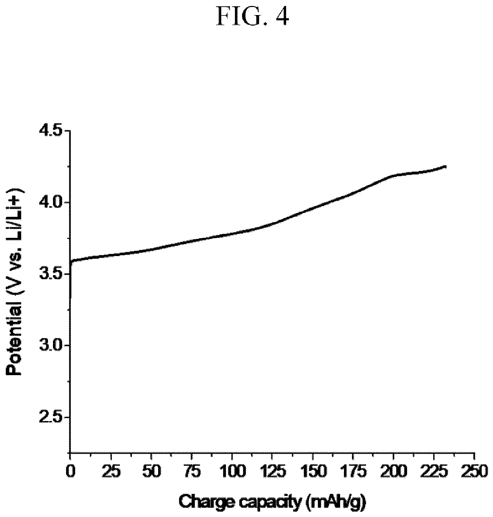

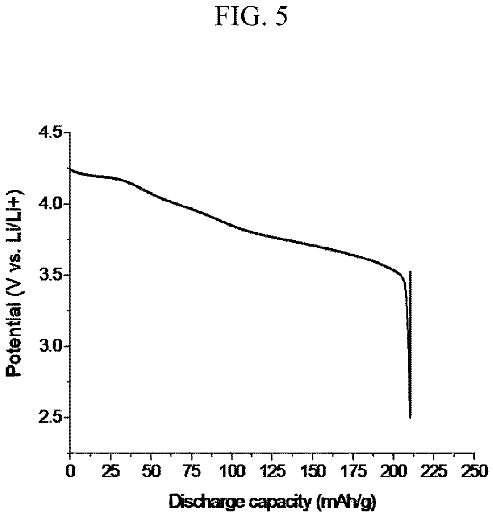

FIG. 2 shows a charge curve of Comparative Example 1, FIG. 3 shows a discharge curve of Comparative Example 1, FIG. 4 shows a charge curve of Example 1, and FIG. 5 shows a discharge curve of Example 1.

Comparing FIGS. 2 to 5, it can be seen that, when the carbon content in the entire positive electrode active material is 0.03 wt%, charging and discharging proceed with almost no change in the charge/discharge curves before and after coating. This was also observed in Examples 2, 3, and 4.

### Experimental Example 3 - Comparison of Charge and Discharge Curves

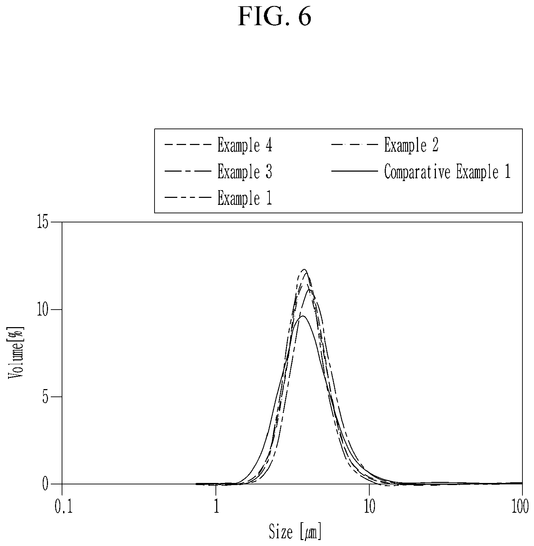

FIG. 6 shows measurement results of the average particle size (D50) of positive electrode active materials composed of single-crystalline particles, after jet mill pulverization and classification of the positive electrode active materials of Comparative Example 1 and Examples 1 to 4.

As confirmed in Table 2 above, it can be seen that the single-crystalline particle positive electrode active material, which showed favorable output results in the Examples, exhibited only a slight increase in particle size compared to Comparative Example 1, with no significant change.

### Experimental Example 4 - SEM Analysis and Structural Analysis

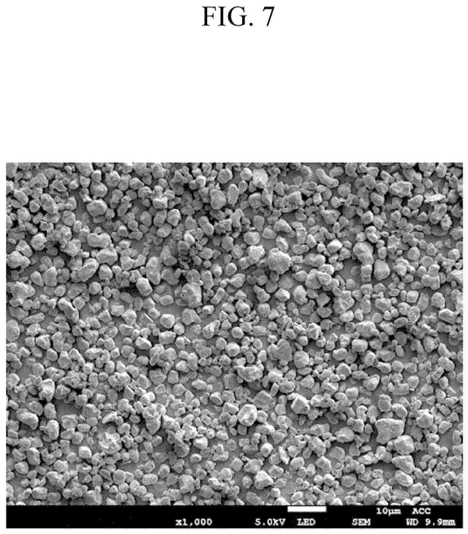

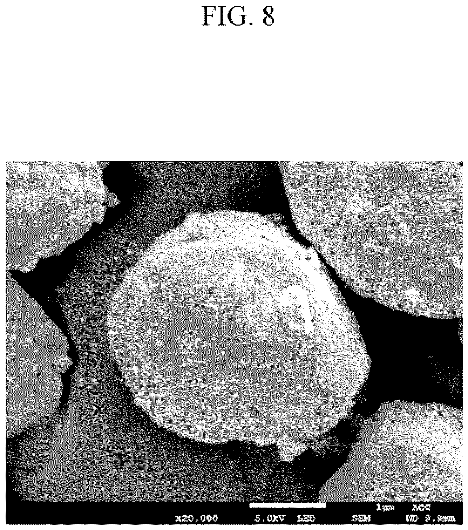

FIG. 7 shows a SEM image of the positive electrode active material of Example 3, taken at a magnification of 1,000×, and FIG. 8 shows a SEM image of the positive electrode active material of Example 3, taken at a magnification of 20,000×.

Referring to FIG. 7, which is a low-magnification SEM image, it can be seen that no fine particles or coarse particles are present, and the particle size distribution is very uniform. Therefore, it can be seen that even when carbon is coated on the surface, the surface is well formed without damage to the particles.

Referring to FIG. 8, which is a high-magnification SEM image, it can be confirmed again that the carbon is well coated, as the single-crystalline particle surface remains close to a spherical shape.

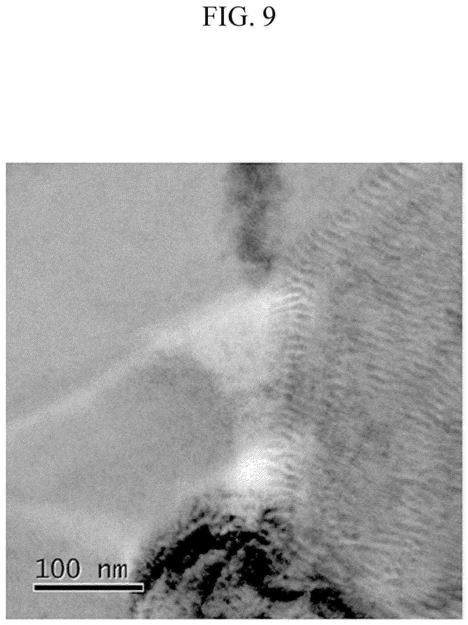

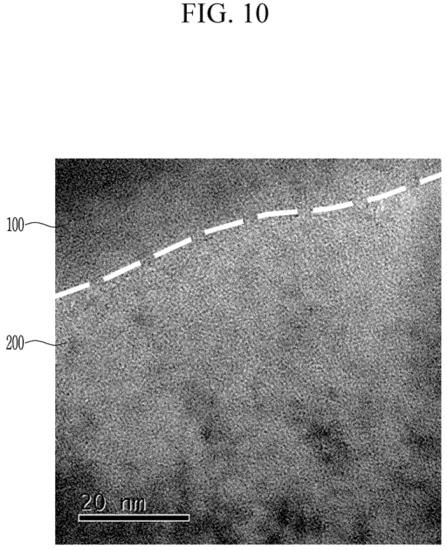

FIG. 9 shows an HRTEM image of the positive electrode active material prepared according to Example 3, obtained using high resolution transmission electron microscope (HRTEM) equipment, and FIG. 10 is a further enlarged view of a central portion where a carbon coating layer, shown in white in FIG. 9, is formed.

Referring to FIG. 9, it can be seen that in the positive electrode active material composed of single-crystalline particles having a monolithic structure in which two to three single crystal particles are clustered, a carbon coating layer with a thickness of 10 nm to 100 nm fills the gaps between the particles. Referring to Fig. 10, it can be seen that carbon is coated between the particles at the point where the particles meet each other, which indicates that the carbon has penetrated well into the particles.

Additionally, it can be seen that the single crystal particles exhibit a crystal structure, whereas the coating layer is present in an amorphous state. From these results, it can be seen that carbon coating by the CVD method is a highly effective method capable of uniformly coating both the surface and interiors of single-crystalline particles.

It will be understood by one skilled in the art to which the present invention belongs that the present invention is not limited to the above embodiments, but can be manufactured in a variety of different forms, and can be implemented in other specific forms without changing the technical spirit or essential features of the present invention. Therefore, the embodiments described above should be understood as illustrative in all respects and not for purposes of limitation.

## Claims

1. A positive electrode active material for a lithium secondary battery, comprising:
a metal oxide composed of a single-crystalline particle; and
a coating layer positioned on a surface of the metal oxide and containing carbon, wherein
the coating layer comprises an amorphous structure.

2. The positive electrode active material for a lithium secondary battery of claim 1, wherein:
the single-crystalline particle comprises at least one of a single crystal structure composed of one particle and a monolith structure composed of two to three clustered particles.

3. The positive electrode active material for a lithium secondary battery of claim 2, wherein:
the metal oxide comprises a carbon layer present at a particle boundary of a monolithic structure in which two to three particles are clustered.

4. The positive electrode active material for a lithium secondary battery of claim 1, wherein:
a content of the carbon is 0.6 wt% or less based on the entire positive electrode active material.

5. The positive electrode active material for a lithium secondary battery of claim 1, wherein:
a thickness of the coating layer is in a range of 10 nm to 100 nm.

6. The positive electrode active material for a lithium secondary battery of claim 1, wherein:
an average particle diameter (D50) of the positive electrode active material is in a range of 3.8 µm to 4.5 µm.

7. The positive electrode active material for a lithium secondary battery of claim 1, wherein:
the metal oxide comprises nickel, cobalt, manganese, and a doping element.

8. The positive electrode active material for a lithium secondary battery of claim 7, wherein:
the doping element comprises one or more selected from the group consisting of Zr, Al, B, P, La, Ta, Ti, W, Mo, Si, Ga, Zn, Nb, Ag, Sn, Bi, Au, Y, Ge, V, Cr, and Fe.

9. The positive electrode active material for a lithium secondary battery of claim 7, wherein:
a content of the doping element is in a range of 0.0005 mol to 0.04 mol based on 1 mol of a total amount of nickel, cobalt, manganese, and the doping element.

10. The positive electrode active material for a lithium secondary battery of claim 7, wherein:
the doping element comprises Zr and Al.

11. The positive electrode active material for a lithium secondary battery of claim 10, wherein:
a content of the Zr is in a range of 0.001 mol to 0.01 mol based on 1 mol of a total amount of nickel, cobalt, manganese, and the doping element.

12. The positive electrode active material for a lithium secondary battery of claim 10, wherein:
a content of the Al is in a range of 0.001 mol to 0.04 mol based on 1 mol of a total amount of nickel, cobalt, manganese, and the doping element.

13. The positive electrode active material for a lithium secondary battery of claim 7, wherein:
a content of nickel in the metal oxide is 0.85 mol or more based on 1 mol of a total amount of nickel, cobalt, and manganese.

14. The positive electrode active material for a lithium secondary battery of claim 1, wherein:
the positive electrode active material further comprises a positive electrode active material comprising a metal oxide composed of secondary particles in which primary particles are agglomerated.

15. The positive electrode active material for a lithium secondary battery of claim 14, wherein:
an average particle diameter (D50) of the positive electrode active material comprising the metal oxide composed of the secondary particles is larger than an average particle diameter (D50) of the positive electrode active material comprising the metal oxide composed of the single-crystalline particles and having the carbon-containing coating layer formed thereon.

16. The positive electrode active material for a lithium secondary battery of claim 15, wherein:
the average particle diameter (D50) of the positive electrode active material comprising the metal oxide composed of the secondary particles is in a range of 10 µm to 20 µm.

17. A method for manufacturing a positive electrode active material for a lithium secondary battery, the method comprising:
preparing a metal hydroxide comprising nickel, cobalt, and manganese;
subjecting a mixture of the metal hydroxide, a lithium raw material, and a doping raw material to a first calcination to obtain a lithium metal oxide; and
subjecting the lithium metal oxide to a second calcination under conditions in which a carbon-containing gas is maintained to form a carbon-containing coating layer on a surface of the lithium metal oxide.

18. The method of claim 17, wherein:
in the forming the coating layer,
the carbon-containing gas comprises at least one of acetylene (C₂H₂) gas, methane (CH₄) gas, ethylene (C₂H₄) gas, and propane (C₃H₈) gas.

19. The method of claim 17, wherein:
the second calcination is performed at temperatures ranging from 560°C to 680°C.

20. The method of claim 17, wherein:
in the forming the coating layer,
the carbon-containing gas is maintained for 0.5 to 10 minutes.

21. The method of claim 17, wherein:
the first calcination is performed at temperatures ranging from 720°C to 900°C.

22. A positive electrode for a lithium secondary battery, comprising:
a current collector; and
a positive electrode active material layer positioned on at least one surface of the current collector and comprising the positive electrode active material of any one of claims 1 to 16, wherein
the positive electrode has a rolling density of 3.7 g/cc or more.

23. A lithium secondary battery comprising the positive electrode of claim 22.
